**Europäisches Patentamt**

**European Patent Office**

**Office européen des brevets**

(19)

(11) Publication number: **0 219 202 B1**

# EUROPEAN PATENT SPECIFICATION

(12)

(45) Date of publication of patent specification: **25.09.91**  (51) Int. Cl.5: **G01N 17/00**, F02D 1/00, F02D 41/00, G01N 27/16

(21) Application number: **86306238.6**

(22) Date of filing: **11.08.86**

(54) **EGR Diagnostic method and apparatus.**

(30) Priority: **09.09.85 US 773799**

(43) Date of publication of application:
**22.04.87 Bulletin 87/17**

(45) Publication of the grant of the patent:
**25.09.91 Bulletin 91/39**

(84) Designated Contracting States:
**DE FR GB IT**

(56) References cited:
**US-A- 4 149 408**
**US-A- 4 252 098**
**US-A- 4 471 745**

**PATENT ABSTRACTS OF JAPAN, vol. 7, no. 71 (M-202)[1216], 24th March 1983; & JP-A-57 212 343 (TOYO KOGYO K.K.) 27-12-1982**

(73) Proprietor: **GENERAL MOTORS CORPORATION**
**General Motors Building 3044 West Grand Boulevard**
**Detroit Michigan 48202(US)**

(72) Inventor: **Chiesa, Alan Francis**
**12473 Wilkes**
**Yale Michigan 48097(US)**
Inventor: **Perry, Edward Charles**
**8025 32 Mile Rd**
**Romeo Michigan 48065(US)**
Inventor: **Medendorp, LeRoy E. (i.o.)**
**64646 Norwich Circle**
**Romeo Michigan 48065(US)**
Inventor: **Schweikert, John Frederick**
**61264 Windwood Court**
**Washington Michigan 48094(US)**

(74) Representative: **Denton, Michael John et al**
**Patent Section Vauxhall Motors Limited 1st Floor Gideon House 26 Chapel Street Luton Bedfordshire LU1 2SE(GB)**

## Description

This invention relates to a method for diagnosing an exhaust gas recirculation (EGR) apparatus of an internal combustion engine, as for example, shown in US-A-4 471 745.

Vehicle internal combustion engines employ numerous sub-devices and associated sensors to effect its operation. The sub-devices include, for example, spark timing devices, fuel control devices and exhaust gas recirculation apparatus. The failure of any of the sub-devices or their sensors may detrimentally affect the operation of the internal combustion engine in terms of either performance or exhaust emissions. Therefore, it is desirable to be able to diagnose the various sub-devices and sensors of an internal combustion engine so as to evaluate whether or not the sub-device or sensor is operating in a satisfactory manner. This invention is directed toward a method and apparatus for diagnosing the operation of the exhaust gas recirculation apparatus of an internal combustion engine.

Recirculation of exhaust gases in an internal combustion engine has been developed as a method for inhibiting the formation of oxides of nitrogen during the combustion process of the internal combustion engine. To accomplish that purpose, exhaust gas recirculation (EGR) apparatus typically include EGR valves for varying the amounts of exhaust gases recirculated with exhaust backpressure in order to provide exhaust gas recirculation substantially proportional to induction air flow. One such apparatus is shown and described in US Patent No 4,364,368.

Exhaust gas recirculation apparatus may be utilized with numerous forms of fuel delivery devices. For example, one such fuel delivery device may meter fuel based on air flow as measured by engine speed and the pressure in the intake manifold of the internal combustion engine. This method of air flow measurement is commonly referred to as the speed-density method.

In a speed-density type of fuel delivery device, a variation in the percentage of the exhaust gases recirculated into the intake manifold results in a variation in the air/fuel ratio of the combustible mixture supplied to the internal combustion engine. When the fuel delivery device includes closed loop adjustment of the air/fuel ratio (as, for example, shown in US Patent No 4,130,095) in response to an oxygen sensor positioned in the exhaust stream, the fuel delivered is adjusted via the integral and proportional terms of the closed loop adjustment to return the air/fuel ratio to the desired air/fuel ratio which is typically the stoichiometric ratio.

A failure warning device for an EGR apparatus is shown in US Patent No 3,850,151. This device has the disadvantage that it requires the installation of a special circuit comprised of relays, fuses, and sensors such as pressure and temperature sensors to monitor EGR operation, even on internal combustion engines utilizing closed loop adjustment of the air/fuel ratio.

A similar system is disclosed in US-A-4,471,745. However, this arrangement fails to provide any indication of failure of the system in its initial condition.

The object of the present invention is to diagnose the operation of EGR apparatus of an internal combustion engine in which the fuel delivery device is of the speed-density type and in which the fuel delivery device includes closed loop adjustment of the air/fuel ratio.

To this end, a method in accordance with the present invention are characterised over US-A-4,471,745 by the features specified in Claim 1.

Known closed loop control systems typically provide a closed loop adjustment that is the sum of a proportional term and an integral term. The value of each of the proportional term and the integral term is based on a sensed error in a controlled parameter. The proportional term is proportional to the magnitude of the error and the integral term is the integral of the error. Therefore, the integral term continues to change in direction to reduce the magnitude of the error until the sensed error is zero, at which time the proportional term necessarily is zero. The amount of the integral term at this time represents the total closed loop adjustment required to restore the controlled parameter to the desired value resulting in zero error.

In these known closed loop control systems, after time under steady state conditions, the closed loop adjustment and the integral term are equivalent as above described. However, the foregoing becomes a little complicated in closed loop adjustment of the air/fuel ratio when considering the use of an oxygen sensor, which acts as a switch and senses only rich or lean error and not the magnitude of the error. The principal, however, is the same. In this special case, the proportional term is either a plus or a minus constant value in response to a sensed rich or lean error, and the integral term assumes a value in response to the sensed rich or lean error conditions whereat the average of the time that the oxygen sensor indicates rich is equal to the time that the oxygen sensor indicates lean. This is equivalent to the zero error condition described above where the integral term is effectively the closed loop adjustment because the average of the proportional term in response to sensed rich or lean error is zero. Even though the average of the proportional term at this time is zero, it is switching back and forth between plus and minus. In the present invention, therefore, the change of the integral term is used to indicate the closed loop adjustment required to restore the air/fuel ratio back to the desired air/fuel ratio.

The present invention provides for the diagnosing of the operation of the exhaust gas recirculation apparatus on an internal combustion engine in which the fuel delivery device employs the speed-density form of air measurement and in which the fuel delivery device includes a closed loop adjustment of the air/fuel ratio of the combustible mixture supplied to the internal combustion engine. Particularly, this invention utilizes the reaction of the integral term of the closed loop adjustment to a momentary change in the EGR flow to the internal combustion engine to sense EGR apparatus operation. Hence, no special circuitry is required as in US Patent No.3,850,151 mentioned above.

In accordance with this invention, when the internal combustion engine is operating within a stabilized set of constraints and during which exhaust gases are normally recirculated into the intake manifold of the internal combustion engine, the integral term of the closed loop adjustment of the fuel supplied to the internal combustion engine is stored in a memory. This integral term represents the amount of the closed loop adjustment required to obtain the desired air/fuel ratio. The exhaust gas recirculation apparatus is then disabled which results in a shift in the air/fuel ratio of the combustible mixture drawn into the cylinders of the internal combustion engine from the intake manifold by an amount dependent upon the amount of exhaust gases recirculated prior to the EGR apparatus being disabled. The engine control module senses the shift in the air/fuel ratio and adjusts the fuel supplied to the internal combustion engine to restore the air/fuel ratio to the desired air/fuel ratio.

Over time and if the engine operating condition has not significantly changed, the value of the integral term represents the total closed loop adjustment required to again obtain the desired air/fuel ratio. Therefore, the change in the integral term required to restore the air/fuel ratio to the desired air/fuel ratio represents the shift in the air/fuel ratio resulting from the disablement of the EGR apparatus, and, therefore, the amount of exhaust gases being recirculated by the EGR apparatus prior to its disablement. If the change in the integral term exceeds a calibration value, it is indicative of an EGR apparatus that was operating satisfactorily before being disabled. However, if the change does not exceed the calibration value, it is indicative of an exhaust gas recirculation apparatus that was not operating in a satisfactory manner.

The invention is further described, by way of example, with reference to the following description of a preferred embodiment and the accompanying drawings, in which:-

Figure 1 illustrates an internal combustion engine and associated apparatus including an exhaust gas recirculation apparatus;

Figure 2 is a diagram of the engine control module of Figure 1 that is operative to diagnose the operation of the exhaust gas recirculation apparatus in accordance with the principles of this invention;

Figures 3 and 4 are diagrams illustrating the operation of the engine control module in diagnosing the operation of the exhaust gas recirculation apparatus.

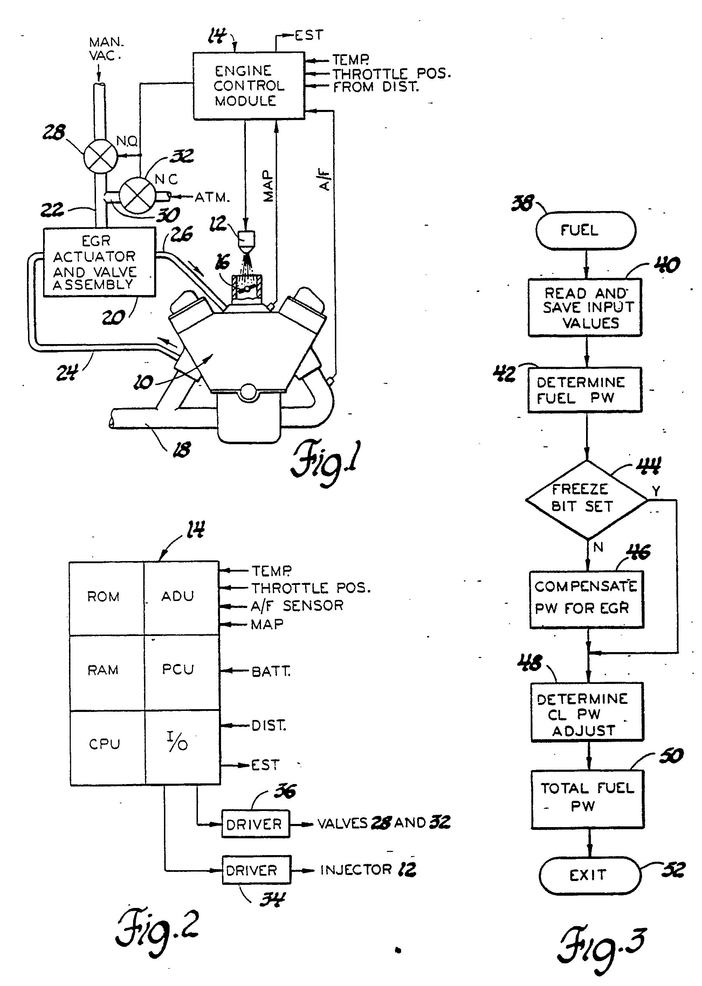

Referring to Figure 1, an internal combustion engine 10 is provided fuel by means of a fuel delivery device in the form of an electromagnetic fuel injector 12 controlled by an engine control module 14 to inject fuel into a throttle bore of the internal combustion engine 10 at a location above a conventional throttle valve 16. The fuel injected by the electromagnetic fuel injector 12 is mixed with the air drawn into cylinders of the internal combustion engine 10 through the throttle bore to provide a combustible mixture. Exhaust gases from the cylinders are directed to atmosphere through exhaust manifolds of the internal combustion engine 10 and an exhaust conduit 18.

The electromagnetic fuel injector 12 is controlled by the engine control module 14 to maintain a desired air/fuel ratio such as the stoichiometric ratio in response to engine operating parameters including manifold absolute pressure (MAP) as measured by a conventional pressure sensor in an intake manifold of the internal combustion engine 10, and engine speed as measured from pulses provided by a conventional ignition distributor. The engine speed and MAP values are utilized by the engine control module 14 to determine the mass rate of air flow into the internal combustion engine 10 from which the required fuel to attain the desired air/fuel ratio is determined. This form of air flow measurement is commonly referred to as speed-density and the fuel supply arrangement is frequently referred to as a speed-density fuel delivery arrangement.

The engine control module 14 provides for closed loop adjustment of the air/fuel ratio of the combustible mixture supplied to the internal combustion engine 10 to precisely maintain the desired air/fuel ratio. This is accomplished by means of a conventional oxygen sensor positioned in the exhaust stream of the internal combustion engine 10 which senses the oxidizing-reducing (rich/lean) condition of the exhaust gases and which provides a signal to the engine control module 14 indicating the rich or lean status of the air/fuel ratio of the combustible mixture supplied to the internal combustion engine relative to the value of the desired air/fuel ratio.

The closed loop adjustment provided by the engine control module 14 comprises conventional proportional and integral terms (as briefly described above). This form of known closed loop control system is conventional and will not be described in detail.

The internal combustion engine 10 also includes an exhaust gas recirculation (EGR) apparatus for control of exhaust gas emissions. Exhaust gas recirculation is provided by a conventional EGR valve 20, which is backpressure controlled, such as illustrated in the aforementioned US Patent No.4,364,368.

In general, the EGR valve 20 receives a vacuum control signal from the intake manifold via a pneumatic conduit 22 and exhaust gases are directed thereto via a conduit 24. The exhaust gases that are recirculated are provided to the intake manifold from the EGR valve 20 via a conduit 26. An electromagnetic valve 28, which is normally open, is positioned in the pneumatic conduit 22 and is operative when energized via the engine control module 14 to close off the vacuum control signal input to the EGR valve 20. A conduit 30 including an electromagnetic valve 32 (which is normally closed) couples the vacuum control signal input to the EGR valve 20 to atmosphere when the electromagnetic valve 32 is energized by the engine control module 14. By energizing the electromagnetic valves 28 and 32, the engine control module 14 may disable the EGR valve 20 from recirculating exhaust gases via the conduits 24 and 26. The EGR valve 20, pneumatic conduit 22, conduits 24,26,30, and electromagnetic valves 28,32 define the exhaust gas recirculation apparatus.

The engine control module 14 additionally receives inputs from a conventional engine coolant temperature sensor and a conventional throttle position sensor.

Referring to Figure 2, the engine control module 14 takes the form of a digital computer. The digital computer is standard in form and includes a central processing unit (CPU) which executes an operating program permanently stored in a read-only memory (ROM) which also stores tables and constants utilized in determining the fuel requirements of the internal combustion engine 10 and for executing the exhaust gas recirculation diagnostic routine (Figure 4) of this invention. Contained within the CPU are conventional counters, registers, accumulators, flag flip flops, etc., along with a clock which provides a high frequency clock signal.

The digital computer also includes a random access memory (RAM) into which data may be temporarily stored and from which data may be read at various address locations determined in accordance with the programs stored in the ROM.

A power control unit (PCU) receives a voltage from a vehicle battery through a vehicle ignition switch and provides regulated power to the various operating circuits in the engine control module 14.

An input/output circuit (I/O) includes output counter sections independently controlled by the CPU to provide electronic spark timing (EST) signals to the ignition distributor to provide spark timing in the conventional manner and for providing timed control pulses to a driver circuit 34 for controlling the opening time of the electromagnetic fuel injector 12. The I/O also includes an output port from a bistable circuit for issuing command pulses to a driver circuit 36 for controlling the electromagnetic valves 28 and 32 of Figure 1 and an input counter section which receives a pulse output from the ignition distributor and which generates a pulse for each cylinder during each engine cycle. The pulses from the ignition distributor are used for determining the engine speed and also may be used for initiating the energization of the electromagnetic fuel injector 12.

The engine control module 14 further includes an analogue-to-digital unit (ADU) which provides for the measurement of analogue signals. In the present embodiment, the analogue signals include the manifold absolute pressure (MAP) signal, the throttle position signal, the engine coolant temperature signal and the air/fuel ratio signal from the oxygen sensor. The analogue signals are each sampled and converted under control of the CPU and stored in ROM designated RAM memory locations.

When power is first applied to the engine control module 14 such as by the operation of the vehicle ignition switch, the program in the digital computer is initiated and thereafter provides for system initialization. During this system initialization step, initial values stored in the ROM are entered into ROM designated locations in the RAM and counters, flags, and timers are initialized. Thereafter, the program proceeds to a background loop that is continuously executed at, for example, 100 millisecond intervals during which the diagnostic routines including the EGR diagnostic routine of this invention is executed. This background loop is periodically interrupted at, for example, 10 millisecond intervals after which certain programs are executed for controlling functions such as the fuel control routine.

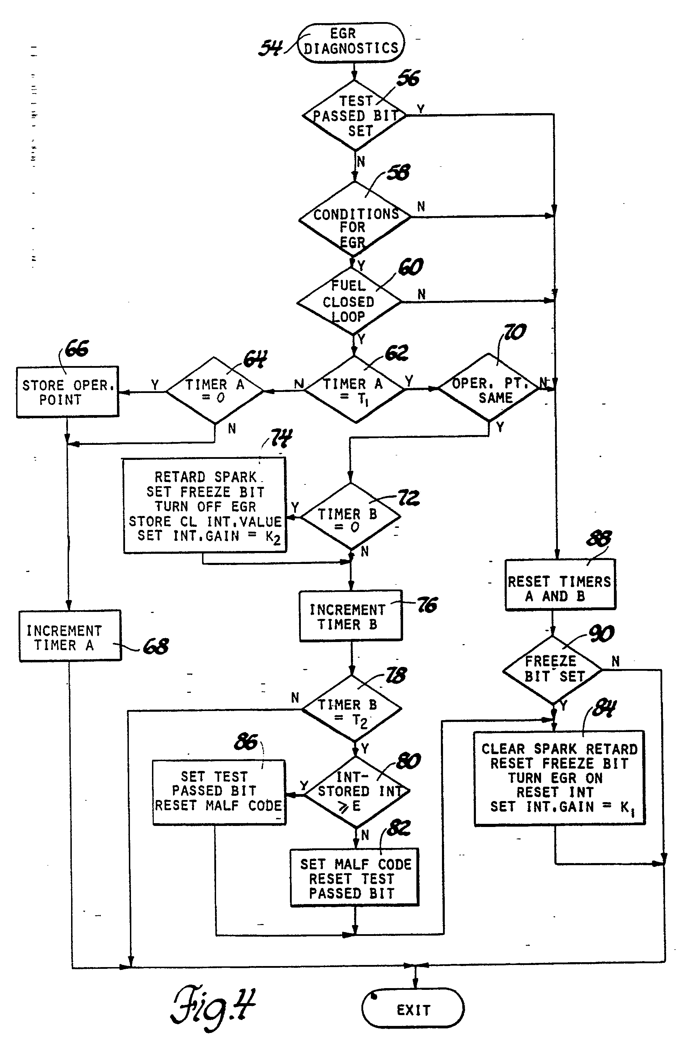

The flow chart of Figure 3 illustrates the general operation of the digital computer in the determination of the required pulse width to be applied to the electromagnetic fuel injector 12 in order to provide the desired air/fuel ratio, which in the preferred embodiment is the stoichiometric ratio which maximizes the conversion efficiency of a three-way catalytic converter that is typically positioned in the exhaust stream. This operation is known as the fuel control routine.

The fuel control routine of Figure 3, which is executed following each interrupt of the background loop, is entered at point 38 and proceeds to a step 40 where the values of manifold absolute pressure, air/fuel ratio, throttle position, engine coolant temperature, and engine speed are determined via the ADU and the I/O and stored in ROM designated RAM memory locations. Thereafter, the program proceeds to a step 42 where the base fuel pulse width to achieve the desired air/fuel ratio is calculated. This calculation is based upon the air flow into the internal combustion engine 10 determined by the speed density method of air flow measurement.

The program next proceeds to a decision point 44 where the condition of a freeze bit in a ROM designated RAM memory location is sensed. The freeze bit will be described with respect to the exhaust gas recirculation diagnostic routine of Figure 4. This freeze bit is set during the EGR diagnostic routine during a period in which exhaust gas recirculation is disabled. If the freeze bit is not set indicating the exhaust gas recirculation apparatus is enabled, the program proceeds to a step 46 where the base fuel pulse width determined at step 42 is open loop compensated for exhaust gases recirculated into the internal combustion engine 10 via the EGR valve 20. If, however, the freeze bit is set indicating that the exhaust gas recirculation apparatus is disabled via the EGR diagnostic routine, the program bypasses the step 46.

From the step 46 or the decision point 44 if step 46 is to be bypassed, the program proceeds to a step 48 where a closed loop adjustment is determined, this closed loop adjustment being that required to be made to the fuel pulse width (determined at step 42 or 46) in response to the sensed air/fuel ratio from the oxygen sensor, in a direction to achieve the desired air/fuel ratio. This closed loop adjustment includes the integral term, the value of which is based on the error in the air/fuel ratio established by operation of the steps 42 and 46.

Next the program proceeds to step 50 where the closed loop adjustment determined at step 48 is summed to the fuel pulse width determined at step 46 (or step 42 if step 46 was bypassed) to provide a resulting fuel pulse width determined to achieve the desired air/fuel ratio. From step 50, the program exits the routine at 52. The determined fuel pulse width is issued to the electromagnetic fuel injector 12 upon receipt of a pulse from the ignition distributor in the conventional manner for supplying fuel to the internal combustion engine 10.

Referring to Figure 4, there is illustrated the EGR diagnostic routine that is executed at 100 millisecond intervals during the background loop of the digital computer of the engine control module 14. The EGR diagnostic routine is entered at point 54 and then proceeds to a decision point 56 where it determines whether or not the EGR diagnostic routine had previously tested the EGR apparatus and found its operation satisfactory since the digital computer of the engine control module 14 was last initialized upon power being applied thereto. This is accomplished by sampling a test passed bit in a RAM memory location which is reset upon system initialization and which is set if the EGR diagnostic routine indicates that the EGR apparatus has passed the required operating criteria. If this test passed bit is in a reset condition indicating that the EGR apparatus has not yet passed the EGR test criteria, the program proceeds to a decision point 58 where it determines whether certain engine operating conditions are within respective range values representing that the EGR apparatus should be recirculating exhaust gases to the intake manifold of the internal combustion engine 10. These operating conditions may include engine coolant temperature, throttle position, manifold absolute pressure and engine speed.

If all of the conditions are within their respective range values, the program proceeds to a decision point 60 where it determines whether or not the fuel is being closed loop adjusted in response to the oxygen sensor in the exhaust system of the internal combustion engine 10. For example, it is typical in known closed loop control systems to disable closed loop adjustment of fuel during certain engine operating conditions including engine warm-up.

If the fuel is being closed loop adjusted, the program proceeds to a decision point 62 where the value of a timing register A in the RAM is compared to a calibration constant $T_1$. The calibration constant $T_1$ represents the time required for the internal combustion engine 10 to be operating at the same operating point representing steady state engine operation before the EGR apparatus will be tested. If the steady state operating time is not equal to $T_1$, the program proceeds to a decision point 64 where it determines whether or not the time in timing register A is zero. If the time in timing register A is zero, the program proceeds to a step 66 where the operating point of the internal combustion engine 10 is stored in the RAM. The operating point may be represented by the value of engine speed and engine load as represented by either manifold absolute pressure or throttle angle.

Following step 66 or following decision point 64 if the time in timing register A is greater than zero, the program proceeds to a step 68 where the timing register A is incremented. Thereafter, the program exits the EGR diagnostic routine of Figure 4. Assuming the conditions in decision points 56 through 60 do not change, the foregoing steps are repeated until the time in timing register A becomes equal to $T_1$ as sensed at decision point 62. Thereafter, the program proceeds from decision point 62 to the decision point 70 where the present engine operating point as represented by the last sensed values of engine speed and engine load at step 40 of Figure 3 is compared to the operating point stored at step 66. If the operating point is the same, the internal combustion engine 10 has operated at a stable state for a period sufficient to allow the integral term to adjust the air/fuel ratio to the desired air/fuel ratio at that engine operating point and that those conditions still exist. $T_1$ therefore functions to impose a delay between step 66 and decision point 70.

Assuming the engine operating point has remained the same, the program proceeds to a decision point 72 where the time in a timing register B in the RAM is compared to zero. If the time is zero, the program proceeds to a step 74 to initiate the test of the EGR apparatus. At this step 74, the gain of the integral term utilized in step 48 in Figure 3 is increased from a value $K_1$ to a value $K_2$ (thereby decreasing the time response of the engine control module 14 in effecting adjustment of the air/fuel ratio to the desired air/fuel ratio); the value of the current integral term is stored in a ROM designated RAM location; the electromagnetic valves 28 and 32 of Figure 1 are energized to disable the exhaust gas recirculation apparatus; the freeze bit previously described in decision point 44 of Figure 3 is set indicating test in progress; and the electronic spark timing signal provided to the ignition distributor is adjusted to retard the spark to prevent knocking that otherwise may result as the result of the exhaust gas recirculation apparatus being disabled.

From step 74, the program proceeds to a step 76 where the timing register B is incremented. Thereafter and until the timing register B is reset, the program proceeds directly from decision point 72 to step 76 bypassing the step 74.

From step 76, the program proceeds to a decision point 78 wherein the time in timing register B is compared to a calibration constant $T_2$, the calibration constant $T_2$ being a time interval sufficient to allow the integral term to readjust the air/fuel ratio to the desired air/fuel ratio after termination of the exhaust gases recirculated into the intake manifold at step 74. If the time stored in the timing register B has not yet attained the value of $T_2$, the program exits the EGR diagnostic routine.

When the timing register B has been incremented by repeated executions of the EGR diagnostic routine of Figure 4 to the value of $T_2$, the program proceeds from the decision point 78 to a decision point 80 where the value of the integral term (which is the value required to adjust the air/fuel ratio to the desired air/fuel ratio in response to the absence of exhaust gas recirculation) is compared to the value of the integral term stored at step 74 at the beginning of $T_2$. The difference is representative of the amount of exhaust gases being recirculated to the internal combustion engine 10 prior to being disabled at step 74. A difference equal to or greater than a calibration value E represents a satisfactory recirculation of exhaust gases into the internal combustion engine 10 prior to step 74. If the difference is equal to or greater than calibration value E, the program then proceeds to a step 86 where the passed test bit is set indicating that the exhaust gas recirculation apparatus has passed the diagnostic test. Also at this step 86, a malfunction code bit is reset.

The program next proceeds to a step 84 where the engine control module 14 is returned to the initial state for normal operation of the internal combustion engine 10 by clearing the spark retard request; resetting the freeze bit; again enabling EGR by deenergizing the electromagnetic valves 28 and 32 of Figure 1; setting the integral term to the value stored at step 74; and returning the gain of the integral term to the value $K_1$. The program then exits the EGR diagnostic routine.

If at decision point 80, it is determined that the difference in the values of the integral term is less than the calibration value E, the exhaust gases recirculated to the internal combustion engine 10 by the EGR apparatus prior to step 74 were inadequate representing a malfunction in the EGR apparatus. The program then proceeds to a step 82 where the malfunction code bit in the RAM is set and the passed test bit is reset to provide an indication of the failed test. An alarm may also be provided to the vehicle operator at this step via the I/O. The program then proceeds to the step 84 to return the engine control module 14 to the initial state for normal operating condition as previously described.

If at any time during the repeated executions of the EGR diagnostic routine and prior to the expiration of the calibration constant $T_1$ as determined at decision point 62 or the calibration constant $T_2$ as determined at decision point 78, any of the criteria of decision points 58, 60, and 70 are not met, reinitiation of the test of the EGR apparatus occurs by resetting the timing registers A and B at step 88. If the timing registers A and B are reset at step 88, the program proceeds to step 90 where the freeze bit in the RAM is sampled. If set, indicating that the test had been initiated but some criteria occurred terminating the test, the program proceeds to the step 84 to re-initialize the engine control module 14 as previously described. However, if the freeze bit is reset, the program exits the routine.

## Claims

1.  A method of diagnosing the operation of an exhaust gas recirculation apparatus (20-32) of an internal combustion engine (10) having a fuel delivery device (12) with closed loop adjustment of the air/fuel ratio of a combustible mixture delivered to the internal combustion engine, the method comprising the sequential steps of

    a) determining whether or not the EGR apparatus has been previously satisfactorily tested since a digital computer of an engine control module (14) was last initialised upon power being applied thereto, and where not:

    b) determining for the first time a first value of an integral term of the closed loop adjustment whilst the EGR apparatus is enabled and when the air/fuel ratio is at the stoichiometric ratio;

    c) disabling the EGR apparatus;

    d) allowing the air/fuel ratio to return to the stoichiometric ratio;

    e) determining for the first time a second value of the integral term;

    f) determining the difference between the first and second values of the integral term;

    g) providing an indication to the vehicle operator of failure of the EGR apparatus if the difference is less than a calibration value (E), where E represents a value indicating satisfactory operation of the EGR apparatus.

## Revendications

1.  Un procédé de diagnostic du fonctionnement d'un appareil de recyclage de gaz d'échappement (20-32) d'un moteur à combustion interne (10) comportant un dispositif d'alimentation en carburant (12) à régulation en boucle fermée du rapport air/carburant d'un mélange combustible, délivré au moteur à combustion interne, le procédé comprenant les opérations successives consistant :

    a) à déterminer si l'appareil de recyclage de gaz d'échappement a ou non été antérieurement testé de manière probante depuis la dernière initialisation d'un calculateur numérique d'un module de commande de moteur (14), lors de sa mise sous tension, et, dans la négative :

    b) à déterminer pour la première fois une première valeur d'un terme intégral de la régulation en boucle fermée cependant que l'appareil de recyclage de gaz d'échappement est en service, et quand le rapport air/carburant est à la valeur stoechiométrique ;

    c) à mettre hors service l'appareil de recyclage de gaz d'échappement ;

    d) à laisser le rapport air/carburant revenir à la valeur stoechiométrique ;

    e) à déterminer pour la première fois une deuxième valeur du terme intégral ;

    f) à déterminer la différence entre la première et la deuxième valeurs du terme intégral ;

    g) à fournir à l'opérateur du véhicule une indication de défaillance de l'appareil de recyclage de gaz d'échappement si la différence est inférieure à une valeur d'étalonnage (E) , où E représente une valeur indiquant un fonctionnement satisfaisant de l'appareil de recyclage de gaz d'échappement.

## Patentansprüche

1.  Diagnose-Verfahren für den Betrieb einer Abgas-Rückführvorrichtung (20-32) einer Brennkraftmaschine (10) mit einem Treibstoff-Zuliefergerät (12) mit Regeleinstellung des Luft/Treibstoff-Verhältnisses eines der Brennkraftmaschine zugelieferten brennbaren Gemischs, wobei das Verfahren die aufeinanderfolgenden Schritte umfaßt, daß

    a) bestimmt wird, ob die Abgas-Rückführvorrichtung vorher zufriedenstellend geprüft wurde, seit ein Digitalcomputer eines Maschinensteuermoduls (14) zum letzten Mal über daran angelegte Leistung initialisiert wurde, und falls nicht:

    b) zum ersten Mal ein erster Wert eines integralen Terms der Regeleinstellung bestimmt wird, während die Abgas-Rückführvorrichtung freigegeben ist und das Luft/Treibstoff-Verhältnis sich bei einem stöchiometrischen Verhältnis befindet;

    c) die Abgas-Rückführvorrichtung gesperrt wird;

    d) eine Rückkehr des Luft/Treibstoff-Verhältnisses zu dem stöchiometrischen Verhältnis zugelassen wird;

    e) zum ersten Mal ein zweiter Wert des Integralterms bestimmt wird;

    f) die Differenz zwischen dem ersten und dem zweiten Wert des Integralterms bestimmt wird;

    g) eine Fehleranzeige der Abgas-Rückführvorrichtung an die Bedienungsperson des Fahrzeugs geschaffen wird, wenn die Differenz kleiner als ein Eichwert (E) ist, wobei E einen zufriedenstellenden Betrieb der Abgas-Rückführvorrichtung anzeigenden Wert darstellt.

EP 0 219 202 B1

Fig.1

Fig.2

Fig.3

9

Fig.4